# FASCICULE DE BREVET EUROPEEN

(11) **EP 2 959 770 B1**
(45) Date de publication et mention de la délivrance du brevet: **12.04.2017**
(21) Numéro de dépôt: 15173919.0
(22) Date de dépôt: 25.06.2015
(51) Int. Cl.: A01G 27/00, A01G 1/00

(54) **SYSTÈME, NOTAMMENT POUR LA CULTURE DE VÉGÉTAUX, COMPRENANT UNE RÉSERVE D'EAU DONT LE TROP PLEIN EST ÉVACUÉ À DÉBIT CONSTANT**
SYSTEM, INSBESONDERE ZUM ANBAU VON PFLANZEN, DAS EINEN WASSERVORRATSBEHÄLTER UMFASST, DESSEN ÜBERLAUFSYSTEM MIT KONSTANTEM DURCHSATZ ABGELASSEN WIRD
SYSTEM, ESPECIALLY FOR GROWING PLANTS, COMPRISING A WATER SUPPLY FOR WHICH THE OVERFLOW IS DISCHARGED AT A CONSTANT RATE

(30) Priorité: 26.06.2014 FR 1455986
(43) Date de publication de la demande: 30.12.2015
(73) Titulaire: Sarl Le Prieure, 41160 Moisy (FR)
(72) Inventeur: GRIMARD, Jean-Christophe, 41120 Cellettes (FR); LAME, Raphaël, 41160 Moisy (FR)
(74) Mandataire: Regimbeau

(56) Documents cités:
- EP-A1- 1 044 599
- FR-A1- 2 703 213
- US-A1- 2010 325 975

## Description

La présente invention concerne le domaine des systèmes comprenant une réserve d'eau, notamment pour la culture de végétaux.

Plus précisément, la présente invention concerne des moyens de gestion du volume d'une réserve d'eau susceptible d'être alimentée par exemple, mais non exclusivement, par la pluviométrie naturelle.

Plus précisément encore, la présente invention s'applique tout particulièrement, mais non exclusivement, à la gestion du volume de la réserve d'eau contenue dans des bacs de végétalisation, par exemple pour toitures de bâtiments ou équivalents, tels que par exemple les bacs décrits dans le document EP 1 044 599.

On a décrit dans EP 1 044 599 des bacs formés de préférence en matière plastique et comprenant :
- un fond de forme générale rectangulaire,
- un bord latéral qui entoure le fond,
- une pluralité de renfoncements ou compartiments formés dans le fond,
- des moyens qui permettent une communication fluidique entre les différents renfoncements ou compartiments, par exemple formés de goulottes sur le sommet des cloisons délimitant les renfoncements et,
- des orifices de trop plein sur le sommet desdites cloisons.

Les bacs du type précités ont déjà connu un grand succès. Cependant, ils sont parfois sujets à réception soudaine d'un volume d'eau très important, en cas par exemple d'orage. Il convient autant que possible d'évacuer cet apport important au moins en partie assez rapidement pour le confort des plantes cultivées et pour rendre le volume de stockage à nouveau disponible pour les orages suivants, tout en permettant de conserver a contrario une réserve conséquente utile en cas de période longue de sécheresse.

Dans ce contexte la présente invention a pour but de perfectionner l'art antérieur.

La présente invention a en particulier pour but de permettre une évacuation à débit constant des apports importants et subits reçus d'eau, par exemple en cas d'orage violent. L'évacuation à débit constant est importante afin de ne pas surcharger les moyens de canalisation tels que les moyens d'assainissement collectifs ou « tout à l'égout ». L'invention permet ainsi de réduire les risques de ruissellement d'eau sur les chaussées et les risques d'inondation.

Les buts précités sont atteints dans le cadre de la présente invention grâce à un système, notamment pour la culture de végétaux, comprenant une réserve d'eau, caractérisé par le fait qu'il comprend de plus un dispositif de contrôle de l'écoulement vers l'extérieur du volume contenu dans la réserve, lequel dispositif de contrôle comprend un régulateur flottant placé dans la réserve pour suivre le niveau d'eau dans celle-ci, le régulateur flottant définissant une chambre possédant au moins un orifice d'entrée haut en communication fluidique avec le volume de réserve et au moins un orifice bas calibré de sortie, de section réduite de manière à freiner et contraindre l'écoulement, en liaison avec l'extérieur, de sorte que le régulateur flottant autorise une évacuation d'eau vers l'extérieur par l'orifice de sortie, à débit constant, tant que le niveau d'eau dans la réserve est supérieur à la hauteur de l'orifice d'entrée, et interrompt l'évacuation d'eau vers l'extérieur via l'orifice de sortie quand le niveau d'eau dans la réserve est inférieur au niveau de l'orifice d'entrée pour définir alors une réserve d'eau.

Comme on l'expliquera plus en détail par la suite, la structure du système défini dans le cadre de l'invention, permet d'obtenir un débit de fuite constant tant que le niveau d'eau dans la réserve est supérieur à la hauteur de l'orifice d'entrée prévu sur le régulateur flottant du fait que le régulateur flottant permet de définir une hauteur de colonne d'eau constante entre l'entrée dans la chambre et sa sortie tant que le niveau d'eau dans la réserve est supérieur à la hauteur du niveau de l'orifice d'entrée.
L'invention est avantageusement complétée par les caractéristiques suivantes, prises seules ou en une quelconque de leurs combinaisons techniquement possibles :
- le système comprend un tube de liaison souple qui relie l'orifice de sortie prévu sur le régulateur flottant à l'extérieur du contenant, l'orifice calibré de sortie définissant l'orifice principal de perte de charge vers l'extérieur ;
- le système comprend des moyens de guidage à déplacement vertical du régulateur flottant ;
- les moyens de guidage comprennent un pilier vertical engagé dans un canal traversant formé au centre du régulateur flottant ;
- le système comprend des moyens de filtrage intercalés entre chaque orifice d'entrée et chaque orifice de sortie ;
- le système comprend au moins un étage de filtrage, de préférence deux étages de filtrage et très préférentiellement trois étages de filtrage choisi(s) dans le groupe comprenant : un filtre grossier, une chambre de décantation et un filtre fin ;
- le système comprend plusieurs orifices d'entrée ;
- le système comprend plusieurs orifices de sortie ;
- les différents orifices de sortie présentent des diamètres calibrés différents ;
- les orifices de sortie sont définis sur des inserts rapportés sur un boitier ;
- le système comprend des moyens de réglage en hauteur de l'orifice d'entrée ;
- les moyens de réglage en hauteur de l'orifice d'entrée sont choisis dans le groupe comprenant : des cales ou rondelles d'épaisseur variables placées autour d'un pilier de guidage sous le régulateur flottant, un pied réglable en hauteur lié au régulateur flottant, un écrou vissé sur un pilier de guidage et formant buté au régulateur flottant, un pilier de guidage comprenant un pilier portant une butée réglable en hauteur, une pluralité d'orifices d'entrée prévus à des hauteurs différentes sur un boitier et susceptibles d'être obturés sélectivement, un boitier réalisé en deux parties susceptibles de déplacement relatif, par exemple par vissage et comportant respectivement un orifice d'entrée et un orifice de sortie ou un bac dont le fond présente un relief étagé qui conditionne le volume de réserve en fonction de l'endroit où vient se poser le flotteur ;
- le boitier de régulateur flottant comprend au moins un évent ;
- le régulateur flottant est réalisé en matériau thermoplastique par exemple en polyéthylène et/ou polypropylène ;
- le régulateur flottant est placé dans une cassette disposée à l'extérieur du contenant de la réserve d'eau pour faciliter la maintenance ;
- le régulateur flottant comprend un boitier 202) formé de deux éléments démontables pour faciliter la maintenance ;
- le contenant de la réserve d'eau constitue un bac, notamment pour la végétalisation de toitures de bâtiment ou terrasses ;
- le système comprend en outre des moyens formant prise d'air adaptés pour introduire de l'air entre l'orifice bas calibré de sortie de section réduite et l'extérieur du contenant.

La présente invention concerne également un régulateur flottant pour la mise en oeuvre du système précité, comprenant une chambre qui possède au moins un orifice d'entrée haut destiné à être mis en communication fluidique avec un volume de réserve et au moins un orifice bas calibré de sortie en liaison avec l'extérieur de sorte que le régulateur flottant autorise une évacuation d'eau vers l'extérieur par l'orifice de sortie à débit constant tant qu'un niveau d'eau est supérieur à la hauteur de l'orifice d'entrée.

L'invention concerne de plus l'utilisation du régulateur flottant précité et/ou du système précité pour l'évacuation à débit constant d'un surplus de réserve d'eau.

L'invention concerne par ailleurs un procédé de contrôle d'une réserve d'eau, caractérisé par le fait qu'il comprend les étapes consistant à disposer, dans une réserve d'eau, un régulateur flottant équipé d'une chambre possédant au moins un orifice d'entrée haut en communication avec au moins un orifice de sortie bas calibré de section réduite, relier l'orifice bas calibré avec un espace externe à la réserve d'eau, autoriser une évacuation d'eau vers l'extérieur par l'orifice de sortie à débit constant quel que soit le niveau d'eau dans le contenant tant que le niveau d'eau est supérieur à la hauteur de l'orifice d'entrée et interrompre l'évacuation d'eau vers l'extérieur via l'orifice de sortie quand le niveau d'eau dans la réserve est inférieur à celui de l'orifice d'entrée.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en coupe verticale de deux bacs accolés et reliés hydrauliquement, dont l'un équipé d'un dispositif de contrôle d'écoulement à régulateur flottant conforme à la présente invention, en partie haute d'une réserve d'eau, et par conséquent dans une phase de régulation à débit constant du trop-plein de réserve,
- la figure 2 représente une vue similaire en coupe verticale, mais selon un plan de coupe différent de celui de la figure 1, des mêmes bacs avec un niveau bas d'eau dans la réserve, le dispositif d'écoulement à régulateur flottant conforme à l'invention reposant alors sur le fond du bac, et par conséquent dans une phase d'arrêt de l'écoulement régulé,
- la figure 3 représente une vue schématique externe en perspective d'un dispositif de contrôle d'écoulement à régulateur flottant conforme à la présente invention, en position assemblée, engagé sur un pilier central de guidage,

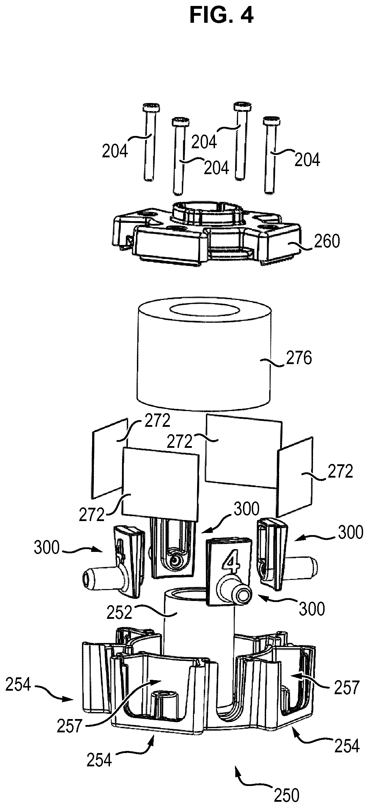

- la figure 4 représente une vue en perspective éclatée des pièces composant le dispositif de contrôle d'écoulement à flotteur,
- la figure 5 représente une vue partielle similaire à la figure 4 et à échelle agrandie d'une coquille inférieure de boîtier de régulateur flottant et de quatre inserts formant orifices de sortie,
- la figure 6 représente une vue en perspective avec coupe verticale du boîtier de régulateur flottant selon un premier plan de coupe diamétral référencé VI-VI sur la figure 3,
- la figure 7 représente une vue similaire en perspective avec coupe verticale du même boîtier de régulateur flottant selon un deuxième plan de coupe diamétral référencé VII-VII sur la figure 3, et
- la figure 8 représente une vue schématique en perspective d'un bac de végétalisation équipé d'un dispositif de contrôle d'écoulement à flotteur conforme à la présente invention
- la figure 9 représente une vue en perspective avec coupe verticale du boîtier de régulateur flottant selon un premier plan de coupe diamétral selon un autre exemple de mode de réalisation de la présente invention, et
- la figure 10 représente une vue en perspective avec coupe verticale du boîtier de régulateur flottant selon un premier plan de coupe diamétral selon encore un autre exemple de mode de réalisation de la présente invention.

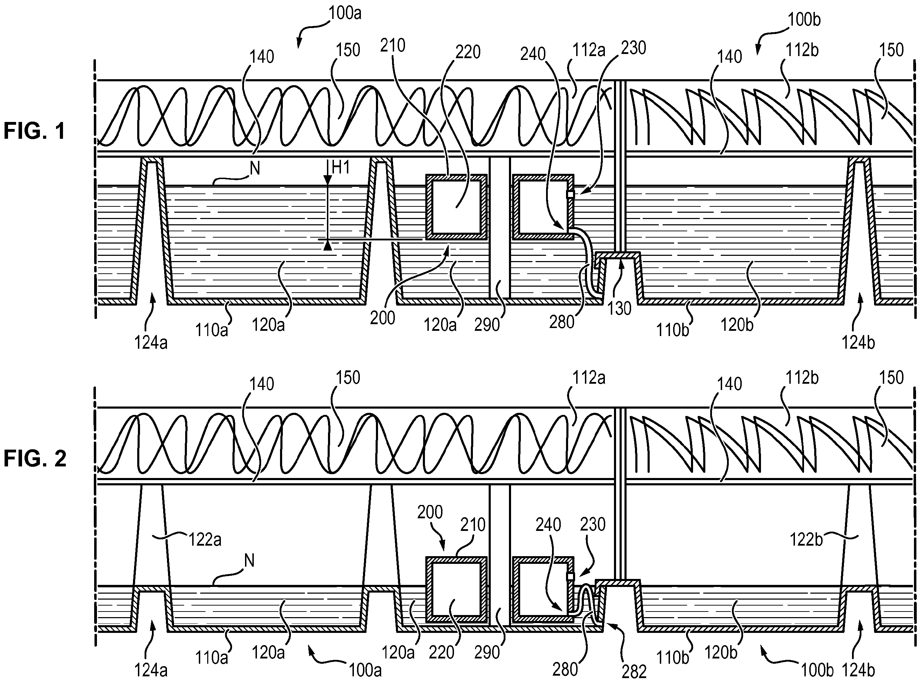

On aperçoit notamment sur les figures 1 et 2 deux bacs 100a, 100b comprenant chacun un fond 110a, 110b, un bord latéral 112a, 112b qui entoure le fond, une pluralité de renfoncements 120a, 120b formés sur le fond 110a, 110b et des moyens 122a, 122b qui permettent une communication fluidique entre les différents renfoncements 120a, 120b. Les moyens de communication 122a, 122b précités peuvent être formés par exemple de goulottes formées sur le sommet des cloisons 124a, 124b délimitant les renfoncements 120a, 120b, comme on le voit à l'examen comparé des figures 1 et 2 passant par des plans de coupe verticaux différents.

Comme on l'exposera par la suite les cloisons 124 peuvent servir de support à une toile poreuse 140 sur laquelle est disposée un substrat de culture.

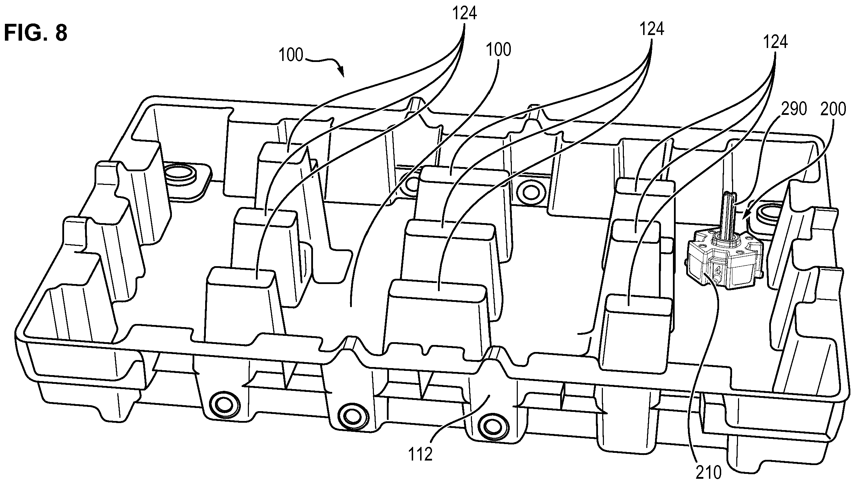

On a représenté sur la figure 8 une variante de réalisation selon laquelle les cloisons 124 sont formées simplement de plots locaux de sorte que les renfoncements et compartiments 120a, 120b sont en large communication mutuelle autour des plots 124 précités.

Selon la représentation particulière donnée sur les figures 1 et 2, les deux bacs adjacents 100a, 100b sont connectés par l'une de leurs faces adjacentes du bord 112a, 112b et en liaison fluidique à ce niveau par l'intermédiaire de moyens classiques en soi et représentés schématiquement sous la référence 130.

De tels moyens 130 sont formés essentiellement de moyens d'emboitage mutuel avec liaison fluidique étanche. Ils peuvent faire l'objet de nombreux modes de réalisation et ne seront pas décrits plus en détail par la suite.

Les bacs illustrés sur les figures 1 et 2 sont de préférence utilisés pour la culture de végétations. A cet effet, une toile poreuse 140 est de préférence disposée sur le sommet des cloisons 124a, 124b ou plots équivalents, pour recevoir une masse de substrat ou terreau 150 propre à accueillir en partie supérieure du bac la végétation à cultiver. La toile 140 sert ainsi d'interface entre le substrat 150 situé en partie supérieure des bacs et une réserve d'eau formée dans les renfoncements 120a, 120b.

On notera également la présence selon les figures 1, 2 et 8 d'un dispositif de contrôle d'écoulement ou régulateur flottant 200 conforme à la présente invention, comprenant un flotteur 210.

Selon le mode de réalisation particulier et non limitatif illustré sur les figures 1 et 2, le flotteur 210 a une forme annulaire, centrée sur un axe vertical à l'utilisation. Il est engagé en son centre sur un pilier de guidage vertical 290, solidaire du fond 110a du bac 100a. Le flotteur 210 est ainsi guidé à déplacement vertical le long de la hauteur du pilier 290 en fonction des évolutions du niveau d'eau dans la réserve des bacs 100a, 100b.

Sur les figures 1 et 2, le niveau d'eau est référencé N.

Le flotteur 210 définit une chambre interne 220.

La chambre 220 possède au moins un orifice d'entrée 230 situé en partie haute du flotteur 210. L'orifice d'entrée 230 est en communication fluidique sans perte de charge, avec le volume d'eau contenu dans la réserve du bac 100a. La chambre 220 possède également au moins un orifice bas de sortie calibré 240.

L'orifice de sortie 240 est en liaison avec l'extérieur du contenant de la réserve d'eau, par un conduit 280. Le conduit 280 est souple et d'une longueur suffisante pour ne pas perturber et au contraire pour autoriser le déplacement du flotteur 210 le long du mât 290 en fonction des fluctuations de niveau d'eau. Le conduit 280 est formé typiquement d'un tube en matière plastique. Il est cependant suffisamment rigide pour ne pas être comprimé sous l'effet de la pression de l'eau contenue dans la réserve et ainsi pour assurer un libre écoulement. On notera que l'orifice calibré de plus faible section définissant la perte de charge en sortie de la chambre 220 est défini au niveau de l'orifice de sortie 240 prévu sur le flotteur 210.

Ainsi dans le cadre de la présente demande de brevet on entend par « orifice calibré de section réduite », un orifice qui définit la plus grande perte de charge entre les orifices d'entrée 230 et l'orifice 282 par lequel le conduit 280 débouche sur l'extérieur du contenant.

Ainsi, comme on le voit sur la figure 1, tant que le niveau N d'eau dans la réserve est supérieur à la hauteur de l'orifice d'entrée 230, c'est-à-dire que le régulateur flottant flotte et ne repose pas sur le fond d'un bac, le débit d'eau s'évacuant du régulateur flottant par l'orifice de sortie 240 est défini par la hauteur H1 de la colonne d'eau présente au-dessus de l'orifice de sortie 240.

Tant que le flotteur 210 flotte, cette hauteur H1 de colonne d'eau présente au-dessus de l'orifice de sortie 240, est constante et par conséquent le débit d'évacuation est alors constant.

Par contre, lorsque le flotteur 210 vient reposer sur le fond 110a du bac 100a et que le niveau d'eau devient inférieur au niveau de l'orifice d'entrée 230, l'évacuation de l'eau par l'intermédiaire du flotteur 210 est interrompue pour constituer alors une réserve d'eau disponible par exemple pour l'irrigation de végétation.

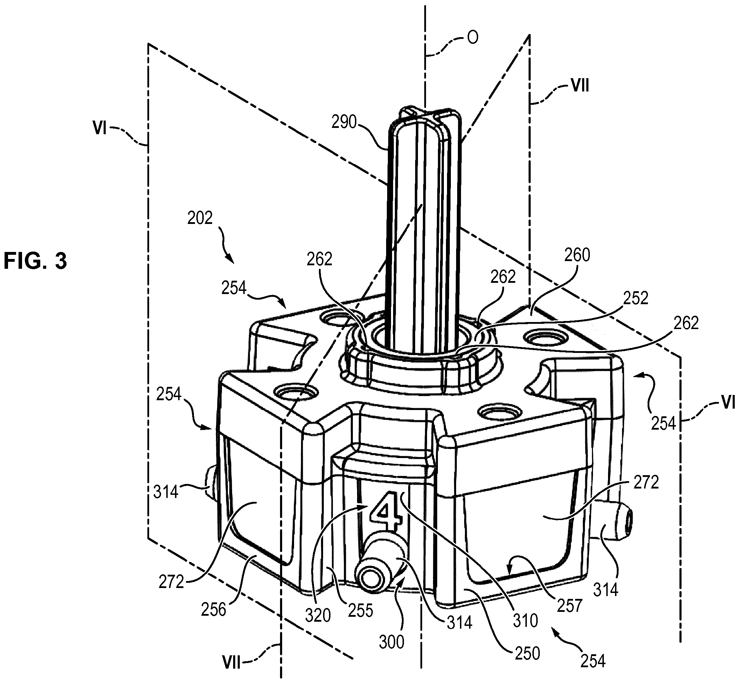

On va maintenant décrire le mode de réalisation particulier du dispositif régulateur flottant 200 représenté sur les figures 3 et suivantes.

Selon ce mode de réalisation particulier, le boîtier 202 de flotteur est composé de deux coquilles 250, 260, respectivement inférieure et supérieure.

Les deux coquilles 250, 260 possèdent des sections droites horizontales sensiblement identiques en forme d'étoile. Comme on le verra à la lecture de la description qui va suivre, selon le mode de réalisation particulier non limitatif, la section droite des deux coquilles 250, 260 comprend quatre branches équiréparties autour d'un axe vertical central de symétrie, vertical à l'utilisation et référencé O-O.

La coquille supérieure 260 qui forme un chapeau de fermeture pour le flotteur, est assemblée sur la coquille inférieure 250 par tous moyens appropriés, par exemple par des moyens filetés tels que quatre vis 204 selon le mode de réalisation particulier représenté sur les figures.

Les deux coquilles 250, 260 définissent en combinaison une chambre interne 220. Selon le mode de réalisation représenté sur les figures, la chambre 220 s'étend essentiellement dans la coquille inférieure 250, celle-ci possédant une hauteur supérieure au chapeau de couverture 260.

La chambre interne 220 possède au moins un orifice d'entrée haut 230 et au moins un orifice de sortie bas 240.

La coquille inférieure 250 définit un canal central traversant vertical 251. Ce canal 251 est isolé fluidiquement de la chambre 220. Le canal 251 est formé par un fût 252 cylindrique de révolution autour de l'axe O-O, raccordé à une paroi de base annulaire 253 horizontale de la coquille 250.

Comme on le voit sur les figures le fût 252 traverse un passage central de la coquille supérieure 260 et s'étend jusqu'à la surface supérieure de celle-ci.

Le boîtier de flotteur 202 est engagé sur un mât ou pilier de guidage 290 vertical et rectiligne, par le biais de ce canal traversant central 251.

Le mât ou pilier de guidage 290 est fixé au fond 110a du contenant définissant la réserve d'eau. Le pilier ou mât 290 peut faire l'objet de nombreux modes de réalisation. Selon le mode de réalisation particulier représenté sur les figures, le mât 290 possède une section droite horizontale constante cruciforme à quatre branches. La section droite horizontale du pilier ou mât 290 est complémentaire de la section droite du canal traversant 251 formé dans le boîtier 252, tout en étant au moins légèrement inférieure à la section droite du canal 251 pour permettre un libre déplacement du flotteur 210 verticalement sur le pilier 290.

Le guidage vertical du flotteur 210 ainsi défini permet de maintenir le flotteur 210 en position générale horizontale tel qu'illustré sur la figure 3. Cette disposition permet de limiter les effets des contraintes appliquées sur le flotteur 210 par le conduit de liaison 280. Elle permet également de maintenir le flotteur 210 en position générale horizontale tel qu'illustré et éviter ainsi le remplissage de la chambre interne 220 par de l'eau s'écoulant par l'intermédiaire d'évents 262 en cas d'inclinaison oblique accidentelle du flotteur 210.

Il est en effet défini entre la coquille supérieure de couverture 260 de forme générale annulaire en étoile et le sommet du fût 252 une pluralité d'évents 262, sous forme de passages verticaux traversants formés entre la coquille 260 et le fût 252, pour relier le volume de la chambre interne 220 à l'extérieur. Ces évents 262 permettent un libre échappement de l'air susceptible d'être contenu à l'origine dans la chambre 220. Dans un mode de réalisation particulier, comme illustré notamment sur les figures 3, 6 et 7, les évents 262 peuvent être formés de gorges rectilignes, parallèles à l'axe O-O, réalisées dans la surface cylindrique interne du passage traversant formé dans le couvercle 260 pour accueillir l'extrémité supérieure du fût 252.

L'invention n'est pas limitée à la réalisation particulière des moyens de guidage vertical formés par le pilier 290 représenté sur la figure 3.

L'invention s'applique en effet à tout autre moyen de guidage équivalent. Le flotteur 210 peut par exemple être guidé par plusieurs mâts ou piliers 290 parallèles ou encore il peut être prévu un mât ou pilier coopérant avec tout autre lieu ou moyen prévu sur le flotteur 210, par exemple une glissière externe verticale prévue sur la surface extérieure du boîtier 202 de flotteur, coopérant avec un guide complémentaire vertical solidaire du bac 100a.

Selon une autre caractéristique de l'invention il est prévu des moyens de filtrage 270 dans la chambre 220, entre chaque orifice d'entrée 230 et chaque orifice de sortie 240.

Les moyens de filtrage 270 peuvent faire l'objet de nombreux modes de réalisation.

Les moyens de filtrage 270 conformes à la présente invention sont de préférence multi-étages.

Plus précisément selon l'invention il est prévu au moins un étage de filtrage, de préférence deux étages de filtrage et très avantageusement 3 étages de filtrage, choisi(s) dans le groupe comprenant : un filtre grossier d'entrée, un labyrinthe formant chambre de décantation et un filtre fin formé par exemple d'une mousse poreuse.

Selon le mode de réalisation représenté sur les figures 3 et suivantes, le régulateur flottant 200 conforme à l'invention comprend les 3 étages en cascades précités comprenant un filtre grossier 272 d'entrée, un labyrinthe formant chambre de décantation 274 et un filtre fin 276.

Plus précisément encore selon l'invention il est prévu de préférence plusieurs orifices d'entrée hauts 230 et plusieurs orifices de sortie bas 240, avantageusement équirépartis autour de l'axe vertical O-O.

Le nombre X d'orifices d'entrée 230 peut être égal ou différent du nombre Y d'orifices de sortie 240.

Selon le mode de réalisation particulier représenté sur les figures X=Y. Il est ainsi prévu le même nombre d'orifices d'entrée 230 que d'orifices de sorties 240, soit en l'espèce quatre orifices d'entrées 230 et quatre orifices de sorties 240, équirépartis autour de l'axe vertical O-O.

Selon le mode de réalisation particulier non limitatif représenté sur les figures 3 et suivantes annexées, la chambre 220 est une chambre annulaire, centrée sur l'axe O-O, définie entre le fut central 252 et une cloison cylindrique radialement externe 259, la base du fut 252 et la base de la cloison 259 étant raccordées de manière étanche sur la paroi horizontale de base 253 en forme générale d'anneau.

La coquille inférieure 250 définit par ailleurs quatre excroissances radiales 254 réparties autour de l'axe O-O, sur la surface extérieure de la cloison 259. Les excroissances 254 sont délimitées chacune par deux flancs radiaux verticaux 255 et une paroi périphérique radialement extérieure verticale 256. La paroi périphérique radialement extérieure verticale 256 est ajourée sous forme d'une fenêtre 257 de contour général rectangulaire en U. La fenêtre 257 débouche sur la surface supérieure de la coquille 250. Au niveau de la périphérie de la fenêtre 257 il est prévu une gorge interne 258 destinée à recevoir le bord d'une grille, par exemple métallique, formant le filtre grossier d'entrée 272.

En variante la grille 272 peut être en matière plastique.

La coquille 250 possède radialement, sur l'intérieur de la paroi 256, la cloison verticale précitée 259 connectée de manière continue et étanche avec la paroi de base 253 horizontale et les flancs radiaux 255 pour définir entre la cloison 259 et la paroi radialement externe 256, une chambre de décantation 274.

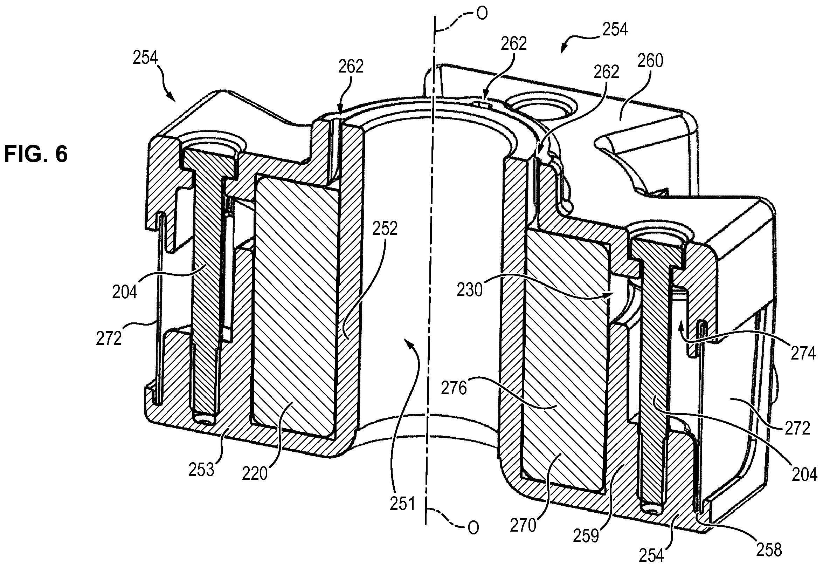

La hauteur de la cloison 259 est inférieure à la hauteur de la coquille 250 et inférieure au niveau d'eau à l'état flottant du dispositif, au niveau des excroissances 254. Ou en variante la coquille de couverture 260 possède un évidemment sur sa surface inférieure en regard du sommet de la cloison 259, au niveau de chaque excroissance 254. Il est ainsi formé entre le sommet de la cloison 259 et la face inférieure de la coquille de couverture 260, au niveau de chaque excroissance 254, un passage visible par exemple sur la figure 6 qui constitue un orifice d'entrée 230.

L'homme de l'art comprend qu'il est ainsi prévu 4 orifices d'entrée 230, à raison d'un orifice d'entrée 230 au niveau de chaque excroissance 254.

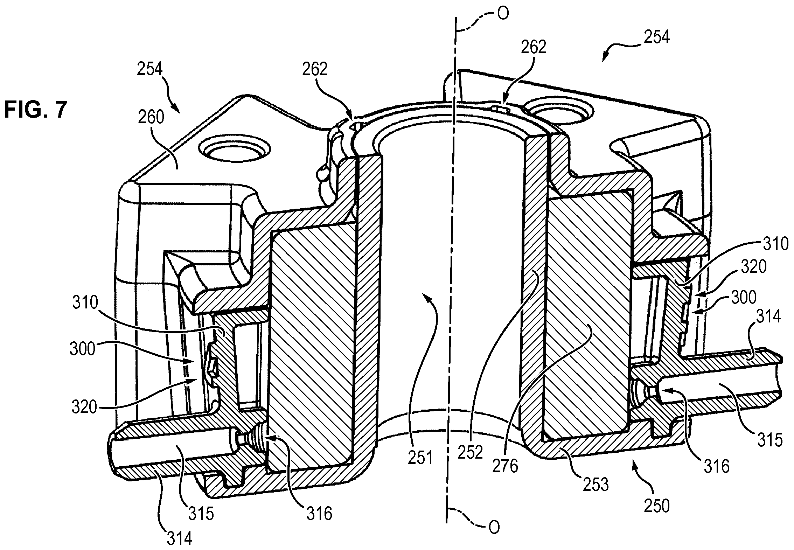

Comme on le voit sur les figures 6 et 7 il est par ailleurs prévu selon l'invention de préférence un filtre fin annulaire, formé par exemple d'un bloc annulaire de mousse de porosité contrôlée, situé dans la chambre 220, c'est-à-dire entre le fut central 252 et la cloison 259.

Le boitier de flotteur illustré sur les figures 3 et suivantes comprend entre chaque paire d'excroissances 254, des moyens définissant un orifice de sortie 240. Ainsi selon le mode de réalisation particulier non limitatif représenté sur les figures annexées il est prévu quatre orifices de sortie 240 équirépartis autour de l'axe O-O, respectivement entre chaque paire d'excroissances 254 adjacentes.

Les orifices de sortie 240 précités peuvent être formés de manière calibré directement dans la paroi du boitier de flotteur 200.

Cependant selon le mode de réalisation particulier préférentiel représenté sur les figures annexées les orifices de sortie 240 sont définis sur des inserts 300 rapporté sur la coquille inférieur 250.

Selon le mode de réalisation particulier représenté sur les figures, chaque insert 300 est formé d'un bloc 310 d'orientation générale verticale comprenant des nervures 312 en saillie sur ses flans, adaptées pour être engagées dans une gorge respective complémentaire 242 formée dans la coquille 250 sur le pourtour d'une fenêtre 244 formée dans la cloison 259 entre chaque paire d'excroissances 254.

Chaque insert 300 possède en outre une tubulure 314 horizontale à l'utilisation et globalement orthogonale au plan moyen du bloc 300. Chaque tubulure 314 possède un passage central traversant 315 qui permet de relier le volume interne de la chambre 220 de flotteur à l'extérieur du contenant de la réserve. Chaque tubulure 314 possède un orifice calibré 316.

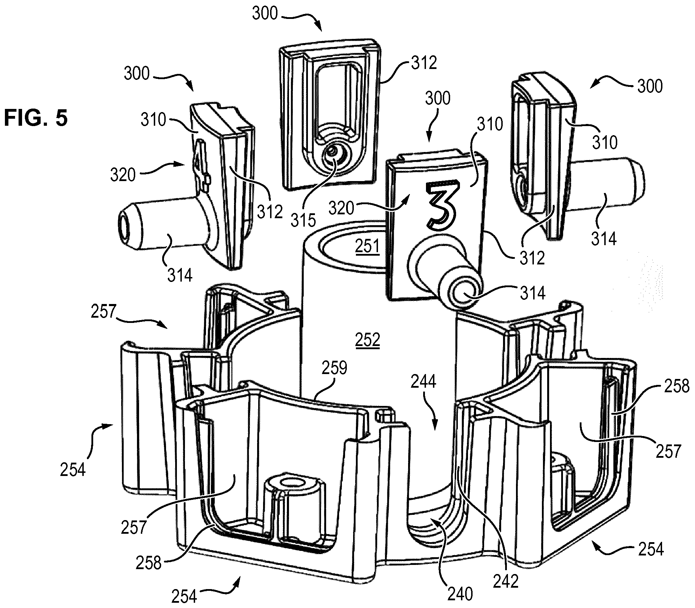

Comme on le voit notamment sur la figure 5 selon le mode de réalisation particulier non limitatif représenté sur les figures il est ainsi prévu dans un mode de réalisation particulier quatre inserts 300 définissant des passages de sortie calibrés 316 de sections respectivement différentes.

Bien entendu un nombre d'insert différent de quatre peut être prévu.

De préférence il est en outre prévu un marquage tel que référencé 320 pour identifier la section respective de passage de sortie de chaque insert 300.

La tubulure 314 choisie en fonction du débit recherché est reliée à l'extérieur du contenant de la réserve par l'intermédiaire du conduit 280 précité. Le cas échéant on peut prévoir des bouchons d'obturation des autres tubulures 314. Cependant comme l'homme de l'art le comprendra les tubulures 314 non raccordées à l'extérieur du contenant par le conduit 280 peuvent rester en libre communication avec le volume interne de la réserve sans perturber le fonctionnement du dispositif.

Bien entendu comme on le comprend à l'examen des figures annexées le tube de liaison 280 débouche lui-même sur l'extérieur des bacs 100a au niveau d'un orifice de sortie 282.

Le boitier 200 de flotteur est réalisé en un matériau de densité inférieure à l'eau de préférence. Il peut s'agir par exemple d'une matière plastique tel que du polyéthylène ou du polypropylène éventuellement chargé.

L'homme de l'art comprendra que la réalisation du boitier 200 en deux coquilles complémentaires 250, 260 assemblées par des vis 204 permet un démontage aisé à des fins de nettoyage et de maintenance, notamment pour nettoyer les grilles d'entrées 272, retirer les matériaux susceptibles d'être accumulés dans la chambre de décantation 274 et nettoyer ou remplacer les filtres fins 276.

A titre d'exemple non limitatif les sections des orifices de passage calibrés 316 prévus dans les tubulures 314 sont choisies dans une gamme allant d'un diamètre de 1 mm à 3mm.

Le fonctionnement du dispositif qui vient d'être décrit est essentiellement le suivant.

Quand le niveau N de l'eau dans la réserve formée dans le fond des bacs 100 est supérieur à la hauteur de l'orifice d'entrée 230 formé par le bord supérieur des cloisons 259, le flotteur 210 flotte au-dessus du fond d'un bac. L'eau entre dans la chambre 220 par les grilles 272, se libère éventuellement d'impuretés dans les chambres de décantation 274 et se déverse dans la chambre 220 au-dessus de la cloison 259, les passages entre le bord supérieur de la cloison 259 et la coquille de couverture 260 formant les orifices d'entrée 230. Après filtration à travers le filtre fin 276, l'eau ressort par l'orifice de sortie 240 relié au conduit de liaison 280.

Lorsque par contre le niveau N d'eau dans la réserve du bac devient inferieur à la hauteur d'un orifice d'entrée 230, le régulateur flottant repose sur le fond 100a d'un bac. Le transfert d'eau entre l'orifice d'entrée 230 et l'orifice de sortie 240 est interrompu et la fonction du régulateur flottant est également interrompue.

Bien entendu la présente invention n'est pas limitée aux modes de réalisation qui viennent d'être décrits, mais s'étend à toute variante conforme à son esprit.

Selon une variante de réalisation il est prévu par exemple des moyens permettant le réglage de la hauteur de réserve d'eau, par réglage de la hauteur du niveau d'orifice d'entré 230.

De nombreuses variantes de réalisation peuvent être envisagées à cet effet.

On peut par exemple prévoir d'intercaler une cale ou rondelle autour du pilier 290 sous le flotteur 210. La fonction de régulateur flottant contrôlant l'écoulement est interrompue lorsque le flotteur 210 repose sur la cale précitée de hauteur choisie. La hauteur de la cale ou rondelle permet de modifier la hauteur de réserve d'eau conservée sous l'orifice d'entrée 230.

On peut également prévoir des moyens de réglage fin, par exemple à base de moyens filetés.

On peut à cet effet prévoir un pied fileté réglable en hauteur sous la base du flotteur 210 ou encore un écrou formant cale ou butée vissé, donc réglable en hauteur, sur le pilier 290 ou encore un pilier 290 réglable comprenant une butée réglable en hauteur, par exemple sous forme d'un pilier composé de deux éléments. On peut également prévoir des moyens permettant de régler la hauteur de l'orifice d'entrée 230 sur les boitiers 202. A cet effet on peut par exemple prévoir une pluralité d'orifices d'entrée 230 repartis en hauteur sur le pourtour du boitier 202 de flotteur et des moyens permettant d'obturer sélectivement tous les orifices d'entrées sauf celui 230 que l'on souhaite garder fonctionnel.

On peut encore prévoir un réglage relatif de deux éléments de boitiers, par exemple reliés par des moyens de vissages complémentaires, l'élément supérieur de boitier possédant l'orifice d'entrée 230 et l'élément de boitier inferieur possédant l'orifice de sortie 240.

Selon une autre variante, le fond du bac présente un relief étagé et il est prévu des moyens permettant de fixer le moyen de guidage 290 sélectivement en différents lieux sur le fond du bac, correspondant à des niveaux de hauteur différents. Le lieu ainsi choisi pour le flotteur conditionne le volume de réserve puisque ce volume de réserve est fonction de l'endroit où vient se poser le flotteur du fait du relief étagé formé sur le fond.

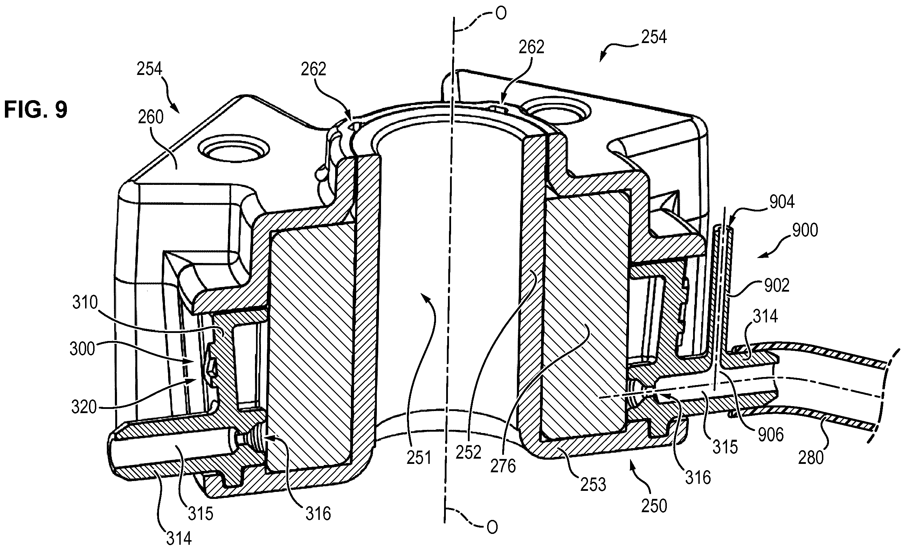

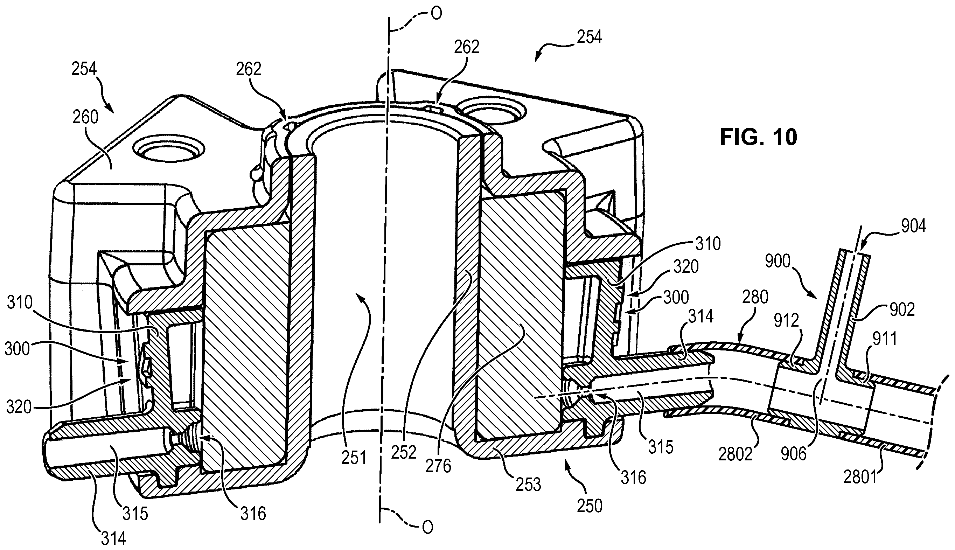

En référence aux figures 9 et 10, le système ou le régulateur flottant peut comprendre en outre des moyens 900 formant prise d'air, par exemple une prise d'air, adaptés pour introduire de l'air entre l'orifice bas calibré de sortie de section réduite 240 et l'extérieur du contenant.

Lorsque le niveau d'eau augmente dans la réserve d'eau, une colonne d'eau de plus en plus haute peut se former entre l'orifice bas calibré de sortie de section réduite 240 et la liaison avec l'extérieur du contenant, ce qui peut détériorer la constance de l'écoulement et donc du débit par une accélération. En particulier lorsqu'un tube de liaison souple 280 relie l'orifice de sortie 240 prévu sur le régulateur flottant 200 à l'extérieur du contenant, son inclinaison peut être à l'origine d'une telle colonne d'eau. Les moyens 900 formant prise d'air peuvent permettre d'introduire de l'air entre l'orifice bas calibré de sortie de section réduite 240 et l'extérieur du contenant, par exemple dans le tube de liaison souple 280, par exemple en fonction de la pression atmosphérique si l'air provient d'une zone soumise à cette pression, diminuant d'autant le débit de fluide. Il est ainsi possible d'améliorer encore la constance du débit de fluide en formant un équilibre entre l'accélération potentielle de l'écoulement et la quantité d'air introduit.

Les moyens 900 formant prise d'air peuvent comprendre un conduit ou un tuyau 902 d'alimentation en air présentant un orifice extérieur 904 adapté pour déboucher dans une zone occupée par de l'air, par exemple de l'air à pression atmosphérique, et un orifice intérieur 906 débouchant entre l'orifice bas calibré de sortie de section réduite 240 et l'extérieur du contenant, de sorte à créer une connexion fluidique entre les deux orifices ou de sorte que l'air circule de l'orifice extérieur 904 vers l'orifice intérieur 906. En particulier, le système est dimensionné de sorte que l'orifice extérieur 904 débouche au-dessus de la ligne de flottaison du régulateur flottant. En particulier, le conduit ou tuyau 902 d'alimentation en air peut présenter une rigidité et une longueur suffisantes pour assurer que l'orifice extérieur 904 débouche au-dessus de la ligne de flottaison du régulateur flottant. Le système est par exemple adapté pour que le conduit ou tuyau 902 d'alimentation en air soit sensiblement vertical lorsque le régulateur flottant flotte dans l'eau.

En référence à la figure 9, les moyens 900 formant prise d'air peuvent être adaptés pour introduire de l'air au niveau de la tubulure 314, par exemple en aval de l'orifice calibré 316 dans le sens d'écoulement de l'eau, par exemple au niveau du passage central traversant 315, l'orifice intérieur 906 pouvant par exemple déboucher à cet endroit. Ce système a pour avantage d'être aisé à dimensionner car les moyens 900 formant prise d'air peuvent faire partie intégrante du régulateur flottant ce qui permet de s'assurer que la prise d'air est toujours fonctionnelle et fournit la quantité d'air nécessaire à un débit constant. Le conduit ou tuyau 902 d'alimentation en air peut s'étendre à partir d'une partie centrale de la tubulure 314 de sorte à former avec la tubulure 314 une structure en forme de T. Le conduit ou tuyau 902 d'alimentation en air peut être positionné de sorte à s'étendre de manière sensiblement verticale en direction de la surface de l'eau lorsque le régulateur flottant flotte dans l'eau, la longueur du conduit ou tuyau 902 d'alimentation en air étant par exemple comprise entre 20% et 80%, par exemple entre 25% et 60%, par exemple entre 30% et 40% de la hauteur du régulateur flottant, de sorte à ce que l'orifice extérieur 904 soit hors de l'eau lorsque le régulateur flottant flotte dans l'eau.

En référence à la figure 10, les moyens 900 formant prise d'air peuvent être adaptés pour introduire de l'air en aval de la tubulure 314 dans le sens d'écoulement de l'eau, par exemple au niveau du tube de liaison souple 280. Les moyens 900 formant prise d'air peuvent ainsi faire partie intégrante du tube de liaison souple 280 ou être formés d'une pièce distincte pouvant être connectée à deux sections 2801 et 2802 du tube de liaison souple. Il est ainsi possible, pour un même régulateur flottant, d'adapter le système en fonction de la réserve d'eau en changeant à la fois le tube de liaison souple 280 et les moyens 900 formant prise d'air.

En particulier, la pièce distincte formant les moyens 900 formant prise d'air peut comprendre au moins une première tubulure 911 adaptée pour être mise en connexion fluidique avec l'orifice intérieur 906, la première tubulure 911 présentant par exemple un diamètre extérieur tel par rapport au diamètre intérieur d'une première section 2801 du conduit 280 que la pièce distincte peut être connectée à l'extérieur du contenant, par exemple par emmanchement d'une extrémité de la première section 2801 du conduit sur la première tubulure 911.

En particulier, la pièce distincte formant les moyens 900 formant prise d'air peut comprendre au une deuxième tubulure 912 adaptée pour être mise en connexion fluidique avec l'orifice intérieur 906, la deuxième tubulure 912 présentant par exemple un diamètre extérieur tel par rapport au diamètre intérieur d'une deuxième section 2802 du conduit 280 que la pièce distincte peut être connectée à la tubulure 314 du régulateur flottant, par exemple par emmanchement d'une extrémité de la deuxième section 2802 du conduit 280 sur la deuxième tubulure 912.

Le conduit ou tuyau 902 d'alimentation en air peut s'étendre à partir d'une partie formant jonction entre la première tubulure 911 et la deuxième tubulure 912 de sorte à former avec les première 911 et deuxième 912 tubulures une structure en forme de T. Le conduit ou tuyau 902 d'alimentation en air et la deuxième section du conduit 280 peuvent être dimensionnés pour que, quelle que soit le niveau d'eau, lorsque le régulateur flottant flotte dans l'eau, l'inclinaison et la longueur du conduit ou tuyau 902 d'alimentation en air sont tels que l'orifice extérieur 904 est hors de l'eau.

Le conduit ou tuyau 902 d'alimentation en air peut avoir typiquement un diamètre supérieur à la moitié du diamètre de la tubulure 314 et/ou au diamètre du tube de liaison souple 280, typiquement supérieur ou égal au diamètre de la tubulure 314 et/ou au diamètre du tube de liaison souple 900, typiquement supérieur au diamètre de la tubulure 314 et/ou au diamètre du tube de liaison souple 280, typiquement inférieur ou égal au double du diamètre de la tubulure 314 et/ou au double du diamètre du tube de liaison souple 280, typiquement compris entre 110% et 160% du diamètre du tube de liaison souple 280, typiquement compris entre 120% et 150% du diamètre du tube de liaison souple 280, typiquement de l'ordre de 140% du diamètre du tube de liaison souple 280. Il est ainsi possible d'optimiser l'effet des moyens 900 formant prise d'air sur la constance du débit d'eau.

L'invention n'est pas limitée à l'application particulière précédemment décrite équipant des bacs de végétalisation. L'invention peut s'appliquer également au contrôle de débit d'eau pour tout élément de terrasse ou équivalent susceptible de contenir une réserve d'eau, par exemple sous forme d'un plancher en bois ou en pierre reposant sur plots ou tout autre structure. L'invention peut également s'appliquer au contrôle de débit d'eau pour toute autre réserve sans culture.

D'une manière générale, au-delà de l'irrigation directe de plantes, l'invention et le moyen de maintien d'une réserve d'eau qu'elle propose, peuvent s'appliquer à de nombreuses applications parmi lesquelles on citera à titre non limitatif :
- le maintien d'une réserve d'eau permettant un stockage d'apport de fertilisants et d'abondements, distribués progressivement à des plantes,
- l'équipement de bassins de décantation, évitant grâce à la constitution d'une réserve permanente un risque de mécanisme de sédimentation et dela limitant la nécessité de curage,
- l'équipement de bassins intermédiaires dans une unité de décantation d'eaux usées, et
- l'équipement de bassins intermédiaires dans des installations de géothermie, permettant de purifier l'eau entre le prélèvement géothermique et les points d'utilisation, par exemple dans des radiateurs.

La présente invention permet notamment par rapport à l'art antérieur une bonne gestion de la réserve en permettant un contrôle de débit constant tout en limitant autant que possible la nécessité d'ajout d'une irrigation additionnelle.

On peut ainsi différencier deux types de réserves : une réserve « dynamique » ou « temporaire » gérée par le dispositif régulateur 200 et qui correspond au volume évacué par le conduit 280, et une réserve permanente, éventuellement ajustable, située sous le niveau des orifices d'entrée 230, qui n'est pas affectée par la vidange contrôlée par le régulateur 200.

De préférence les bacs équipés sont munis de moyens de repérage permettant de définir ceux des bacs équipés du régulateur flottant pour faciliter la maintenance.

Selon une autre variante de réalisation le régulateur flottant conforme à l'invention est placé dans une cartouche étanche mais en communication fluidique avec le volume de réserve des bacs 100, disposée à l'extérieur des bacs 100 pour faciliter les opérations de maintenance.

Comme indiqué précédemment l'invention concerne tant les systèmes formant réserve d'eau équipés du dispositif de contrôle d'écoulement à base de régulateur flottant 200, que le régulateur flottant 200 en lui-même.

L'invention concerne également l'utilisation de ces systèmes et régulateurs flottants pour l'évacuation à débit constant d'un surplus de réserve d'eau et un procédé de contrôle d'une réserve d'eau mettant en oeuvre ces moyens.

L'homme de l'art comprendra que dans certains cas, la présente invention permet de s'affranchir de la nécessité de disposer d'orifices de trop plein sur le sommet des cloisons 124.

## Revendications

1. Système, notamment pour la culture de végétaux, comprenant une réserve d'eau, **caractérisé par le fait qu'**il comprend de plus un dispositif (200) de contrôle de l'écoulement vers l'extérieur du contenant de la réserve, comprenant un régulateur flottant (210) placé dans la réserve pour suivre le niveau de celle-ci, lequel régulateur flottant définit une chambre (220) possédant au moins un orifice d'entrée (230) haut en communication fluidique avec le volume de réserve, au moins un orifice bas calibré de sortie de section réduite (240) en liaison avec l'extérieur du contenant, de sorte que le régulateur flottant (210) autorise une évacuation d'eau vers l'extérieur du contenant par l'orifice de sortie (240) à débit constant tant que le niveau d'eau dans la réserve est supérieur à la hauteur de l'orifice d'entrée (230) et interrompt l'évacuation d'eau vers l'extérieur du contenant via l'orifice de sortie (240) quand le niveau d'eau est inférieur à l'orifice d'entrée (230) pour définir alors une réserve d'eau.

2. Système selon la revendication 1 **caractérisé par le fait qu'**il comprend un tube de liaison souple (280) qui relie l'orifice de sortie (240) prévu sur le régulateur flottant (200) à l'extérieur du contenant, l'orifice calibré de sortie (240) définissant l'orifice principal de perte de charge vers l'extérieur.

3. Système selon l'une des revendications 1 ou 2 **caractérisé par le fait qu'**il comprend des moyens (290) de guidage à déplacement vertical du régulateur flottant (200).

4. Système selon la revendication 3 **caractérisé par le fait que** les moyens de guidage comprennent un pilier vertical (290) engagé dans un canal traversant (251) formé au centre du régulateur flottant.

5. Système selon l'une des revendications 1 à 4 **caractérisé par le fait qu'**il comprend des moyens de filtrage (270) intercalés entre chaque orifice d'entrée (230) et chaque orifice de sortie (240).

6. Système selon l'une des revendications 1 à 5 **caractérisé par le fait qu'**il comprend au moins un étage de filtrage, de préférence deux étages de filtrage et très préférentiellement trois étages de filtrage choisi(s) dans le groupe comprenant : un filtre grossier (272), une chambre de décantation (274) et un filtre fin (276).

7. Système selon l'une des revendications 1 à 6 **caractérisé par le fait qu'**il comprend des moyens de réglage en hauteur de l'orifice d'entrée (230).

8. Système selon la revendication 7 **caractérisé par le fait que** les moyens de réglage en hauteur de l'orifice d'entrée (230) sont choisis dans le groupe comprenant : des cales ou rondelles d'épaisseur variables placées autour d'un pilier de guidage (190) sous le régulateur flottant (210), un pied réglable en hauteur lié au régulateur flottant (210), un écrou vissé sur un pilier de guidage (290) et formant buté au régulateur flottant (210), un pilier de guidage comprenant un pilier portant une butée réglable en hauteur, une pluralité d'orifices d'entrée prévus à des hauteurs différentes sur un boitier et susceptibles d'être obturés sélectivement, un boitier réalisé en deux parties susceptibles de déplacement relatif, par exemple par vissage et comportant respectivement un orifice d'entrée (230) et un orifice de sortie (240) ou un bac dont le fond présente un relief étagé qui conditionne le volume de réserve en fonction de l'endroit où vient se poser le flotteur.

9. Système selon l'une des revendications 1 à 8 **caractérisé par le fait que** le boitier de régulateur flottant comprend au moins un évent (262).

10. Système selon l'une des revendications 1 à 9 **caractérisé par le fait que** le régulateur flottant (210) est placé dans une cassette disposée à l'extérieur du contenant de la réserve d'eau pour faciliter la maintenance.

11. Système selon l'une des revendications 1 à 10 **caractérisé par le fait que** le contenant de la réserve d'eau constitue un bac (100a, 100b), notamment pour la végétalisation de toitures de bâtiment ou terrasses.

12. Système selon l'une des revendications 1 à 11, **caractérisé par le fait qu'**il comprend en outre des moyens (900) formant prise d'air adaptés pour introduire de l'air entre l'orifice bas calibré de sortie de section réduite (240) et l'extérieur du contenant.

13. Régulateur flottant pour la mise en oeuvre du système conforme à l'une des revendications 1 à 12 **caractérisé par le fait qu'**il possède au moins un orifice d'entrée haut (230) destiné à être mis en communication fluidique avec un volume de réserve et au moins un orifice bas calibré de sortie (240) en liaison avec l'extérieur de sorte que le régulateur flottant (210) autorise une évacuation d'eau vers l'extérieur par l'orifice de sortie (240) à débit constant tant qu'un niveau d'eau est supérieur à la hauteur de l'orifice d'entrée (230).

14. Utilisation du régulateur flottant conforme à la revendication 13 et/ou du système conforme à l'une des revendications 1 à 12 pour l'évacuation à débit constant d'un surplus de réserve d'eau.

15. Procédé de contrôle d'une réserve d'eau **caractérisé par le fait qu'**il comprend les étapes consistant à disposer dans une réserve d'eau un régulateur flottant (210) équipé d'une chambre (220) possédant au moins un orifice d'entrée haut (230) en communication avec au moins un orifice de sortie bas calibré (240), relier l'orifice bas calibré (240) avec un espace externe à la réserve d'eau, autoriser une évacuation d'eau vers l'extérieur par l'orifice de sortie (240) à débit constant tant que le niveau d'eau est supérieur à la hauteur de l'orifice d'entrée (230) et interrompre l'évacuation d'eau vers l'extérieur via l'orifice de sortie (240) quand le niveau d'eau dans la réserve est inférieur à celui de l'orifice d'entrée (230).

## Patentansprüche

1. System, insbesondere für den Anbau von Pflanzen, welches einen Wasservorrat umfasst, **dadurch gekennzeichnet, dass** es des Weiteren eine Vorrichtung (200) zum Steuern des Ablaufs zur Außenseite des Vorratsbehälters umfasst, umfassend einen Schwimmregler (210), der in dem Vorrat platziert ist, um dessen Stand zu folgen, wobei dieser Schwimmregler eine Kammer (220) definiert, welche mindestens eine obere Einlassöffnung (230) in Fluidkommunikation mit dem Vorratsvolumen, und mindestens eine kalibrierte untere Auslassöffnung von verringertem Querschnitt (240) besitzt, die derart mit der Außenseite des Behälters in Verbindung steht, dass der Schwimmregler (210) eine Ableitung von Wasser mit konstantem Durchfluss über die Auslassöffnung (240) zur Außenseite des Behälters gestattet, solange der Wasserstand in dem Vorrat höher ist als die Höhe der Einlassöffnung (230), und die Ableitung von Wasser über die Auslassöffnung (240) zur Außenseite des Behälters unterbricht, wenn der Wasserstand unter der Einlassöffnung (230) liegt, um somit einen Wasservorrat zu definieren.

2. System nach Anspruch 1, **dadurch gekennzeichnet, dass** es ein biegsames Verbindungsrohr (280) umfasst, das die an dem Schwimmregler (200) vorgesehene Auslassöffnung (240) mit der Außenseite des Behälters verbindet, wobei die kalibrierte Auslassöffnung (240) die Haupt-Druckverlustöffnung zur Außenseite definiert.

3. System nach einem der Ansprüche 1 oder 2, **dadurch gekennzeichnet, dass** es vertikal bewegbare Führungsmittel (290) des Schwimmreglers (200) umfasst.

4. System nach Anspruch 3, **dadurch gekennzeichnet, dass** die Führungsmittel eine vertikale Säule (290) umfassen, die in einem in der Mitte des Schwimmreglers ausgebildeten Durchgangskanal (251) eingesetzt ist.

5. System nach einem der Ansprüche 1 bis 4, **dadurch gekennzeichnet, dass** es Filtermittel (270) umfasst, die zwischen jede Einlassöffnung (230) und jede Auslassöffnung (240) eingefügt sind.

6. System nach einem der Ansprüche 1 bis 5, **dadurch gekennzeichnet, dass** es mindestens eine Filterstufe, bevorzugt zwei Filterstufen und besonders bevorzugt drei Filterstufen umfasst, ausgewählt aus der Gruppe, die umfasst: einen Grobfilter (272), eine Absetzkammer (274) und einen Feinfilter (276).

7. System nach einem der Ansprüche 1 bis 6, **dadurch gekennzeichnet, dass** es Mittel zur Höhenverstellung der Einlassöffnung (230) umfasst.

8. System nach Anspruch 7, **dadurch gekennzeichnet, dass** die Mittel zur Höhenverstellung der Einlassöffnung (230) ausgewählt sind aus der Gruppe, die umfasst: Keile oder Scheiben von variabler Dicke, die um eine Führungssäule (190) unter dem Schwimmregler (210) platziert sind, einen höhenverstellbaren Fuß, der mit dem Schwimmregler (210) verbunden ist, eine Schraube, die auf eine Führungssäule (290) geschraubt ist und einen Anschlag für den Schwimmregler (210) bildet, eine Führungssäule umfassend eine Säule, welche einen höhenverstellbaren Anschlag trägt, eine Vielzahl an Einlassöffnungen, die auf verschiedenen Höhen an einem Gehäuse vorgesehen und dafür geeignet sind, selektiv verschlossen zu werden, ein Gehäuse, das aus zwei Teilen gefertigt ist, die zum Beispiel durch Schrauben zur Relativbewegung geeignet sind jeweils eine Einlassöffnung (230) und eine Auslassöffnung (240) enthalten, oder eine Wanne, deren Boden ein Stufenrelief aufweist, welches das Vorratsvolumen abhängig von der Stelle, an der der Schwimmer zum Sitzen kommt, bestimmt.

9. System nach einem der Ansprüche 1 bis 8, **dadurch gekennzeichnet, dass** das Schwimmreglergehäuse mindestens eine Entlüftung (262) umfasst.

10. System nach einem der Ansprüche 1 bis 9, **dadurch gekennzeichnet, dass** der Schwimmregler (210) in einer Kassette platziert ist, die zur Erleichterung der Wartung auf der Außenseite des Wasservorratsbehälters angeordnet ist.

11. System nach einem der Ansprüche 1 bis 10, **dadurch gekennzeichnet, dass** der Wasservorratsbehälter eine Wanne (100a, 100b), insbesondere zur Begrünung von Gebäudedächern oder Terrassen, darstellt.

12. System nach einem der Ansprüche 1 bis 11, **dadurch gekennzeichnet, dass** es des Weiteren eine Belüftung bildende Mittel (900) umfasst, die dazu beschaffen sind, Luft zwischen der kalibrierten unteren Auslassöffnung von verringertem Querschnitt (240) und der Außenseite des Behälters einzuführen.

13. Schwimmregler zur Umsetzung des Systems gemäß einem der Ansprüche 1 bis 12, **dadurch gekennzeichnet, dass** er mindestens eine obere Einlassöffnung (230) besitzt, die dazu bestimmt ist, mit einem Vorratsvolumen in Fluidkommunikation gebracht zu werden, und mindestens eine kalibrierte untere Auslassöffnung (240), die derart mit der Außenseite in Verbindung steht, dass der Schwimmregler (210) eine Ableitung von Wasser mit konstantem Durchfluss über die Auslassöffnung (240) zur Außenseite gestattet, solange ein Wasserstand höher ist als die Höhe der Einlassöffnung (230).

14. Verwendung des Schwimmreglers gemäß Anspruch 13 und/oder des Systems gemäß einem der Ansprüche 1 bis 12 zur Ableitung, mit konstantem Durchfluss, eines Überschusses an Wasservorrat.

15. Verfahren zum Steuern eines Wasservorrats, **dadurch gekennzeichnet, dass** es die Schritte umfasst, die darin bestehen, einen Schwimmregler (210), der mit einer Kammer (220) ausgestattet ist, die mindestens eine obere Einlassöffnung (230) besitzt, die mit mindestens einer kalibrierten unteren Auslassöffnung (240) in Kommunikation steht, in einem Wasservorrat anzuordnen, die kalibrierte untere Öffnung (240) mit einem Raum außerhalb des Wasservorrats zu verbinden, über die Auslassöffnung (240) eine Ableitung von Wasser mit konstantem Durchfluss zur Außenseite zu gestatten, solange der Wasserstand höher ist als die Höhe der Einlassöffnung (230), und die Ableitung von Wasser über die Auslassöffnung (240) zur Außenseite zu unterbrechen, wenn der Wasserstand in dem Vorrat unter jener der Einlassöffnung (230) liegt.

## Claims

1. System, particularly for the cultivation of plants, comprising a water reserve, **characterised by** the fact that it also includes a device (200) for control of the flow to the exterior of the reserve container, comprising a floating regulator (210) placed inside the reserve to monitor its level, said floating regulator defines a chamber (220) having at least one top inlet orifice (230) in fluid communication with the reserve volume, at least one calibrated bottom orifice with a reduced cross-section (240) connected to the exterior of the container, such that the floating regulator (210) authorises water to be evacuated to the exterior of the container through the outlet orifice (240) at constant flow as long as the water level in the reserve is higher than the height of the inlet orifice (230) and cuts off the water evacuation to the exterior of the container through the outlet orifice (240) when the water level is below the inlet orifice (230) to define a water reserve.

2. System according to claim 1 **characterised by** the fact that it comprises a flexible connecting tube (280) that connects the outlet orifice (240) provided on the floating regulator (200) to the exterior of the container, the calibrated outlet orifice (240) defining the main head loss orifice leading to the outside.

3. System according to one of claims 1 and 2, **characterised by** the fact that it comprises means (290) for guidance of the vertical displacement of the floating regulator (200).

4. System according to claim 3 **characterised by** the fact that the guidance means include a vertical pillar (290) engaged in a through channel (251) formed at the centre of the floating regulator.

5. System according to one of claims 1 to 4, **characterised by** the fact that it comprises filter means (270) inserted between each inlet orifice (230) and each outlet orifice (240).

6. System according to one of claims 1 to 5, **characterised by** the fact that it comprises at least one filter stage, preferably two filter stages and even more preferably three filter stages chosen from the group composed of a coarse filter (272), a settlement chamber (274) and a fine filter (276).

7. System according to one of claims 1 to 6, **characterised by** the fact that it comprises means of adjusting the height of the inlet orifice (230).

8. System according to claim 7, **characterised by** the fact that the means of adjusting the height of the inlet orifice (230) are chosen from the group comprising controlled thickness shims or washers placed around a guide pillar (190) under the floating regulator (210), a variable height stand connected to the floating regulator (210), a nut screwed onto a guide pillar (290) and forming a stop for the floating regulator (210), a guide pillar comprising a pillar supporting a variable height stop, a plurality of inlet orifices at different heights on a box and that can be closed off selectively, a box made of two parts capable of relative displacement, for example by screwing and comprising an inlet orifice (230) and an outlet orifice (240) respectively or a tank the bottom of which has staged relief controlling the reserve volume as a function of the location at which the float is placed.

9. System according to one of claims 1 to 8, **characterised by** the fact that the floating regulator box comprises at least one vent (262).

10. System according to one of claims 1 to 9, **characterised by** the fact that the floating regulator (210) is placed in a cassette located outside the water reserve container to facilitate maintenance.

11. System according to one of claims 1 to 10, **characterised by** the fact that the water reserve forms a tray (100a, 100b) particularly for cultivation of plants on building roofs or flat roofs.

12. System according to one of claims 1 to 11, **characterised by** the fact that it also comprises means (900) forming an air inlet adapted to allow air to enter between the reduced cross-section calibrated bottom outlet orifice (240) and the exterior of the container.

13. Floating regulator for use of the system according to one of claims 1 to 12, **characterised by** the fact that it comprises at least one top inlet orifice (230) to be put into fluid communication with a reserve volume and at least one calibrated bottom outlet orifice (240) connected to the exterior such that the floating regulator (210) authorises water to be evacuated to the exterior through the outlet orifice (240) at constant flow as long as the water level is higher than the height of the inlet orifice (230).

14. Use of the floating regulator according to claim 13 and/or the system according to one of claims 1 to 12 for the evacuation of a surplus from the water reserve at constant flow.

15. Method for control of a water reserve, **characterised by** the fact that it comprises steps consisting of placing a floating regulator (210) in a water reserve with a chamber (220) having at least one top inlet orifice (230) in communication with at least one calibrated bottom outlet orifice (240), connecting the calibrated bottom orifice (240) to a space external to the water reserve, authorising evacuation of water to the exterior through the outlet orifice (240) at constant flow as long as the water level is higher than the height of the inlet orifice (230) and cutting off the water evacuation to the exterior through the outlet orifice (240) when the water level in the reserve is below the level of the inlet orifice (230).
